# EUROPÄISCHE PATENTSCHRIFT

(11) **EP 1 704 353 B1**
(45) Veröffentlichungstag und Bekanntmachung des Hinweises auf die Patenterteilung: **27.08.2008**
(21) Anmeldenummer: 04804254.3
(22) Anmeldetag: 23.12.2004
(51) Int. Cl.: F16K 31/60

(54) **SANITÄRARMATUR**
SANITARY FITTING
ROBINET SANITAIRE

(30) Priorität: 14.01.2004 DE 102004003133
(43) Veröffentlichungstag der Anmeldung: 27.09.2006
(73) Patentinhaber: Hansgrohe AG, 77761 Schiltach (DE)
(72) Erfinder: HAHN, Arno, 77761 Schiltach (DE); BLATTNER, Joachim, 77716 Haslach (DE)
(74) Vertreter: Patentanwälte Ruff, Wilhelm, Beier, Dauster & Partner
(86) Internationale Anmeldenummer: PCT/EP2004/014660
(87) Internationale Veröffentlichungsnummer: WO 2005/068884

(56) Entgegenhaltungen:
- FR-A- 2 466 692
- US-A- 4 301 836
- US-A- 4 733 688
- US-A- 4 932 433

## Beschreibung

Die Erfindung geht aus von einer Sanitärarmatur, bei der in einem Armaturengehäuse eine Mischerkartusche untergebracht ist. Solche Mischerkartuschen sind bekannt. Sie enthalten ein Mischsystem, mit dessen Hilfe eine Mischung und eine Mengensteuerung durchgeführt werden kann und das mit Hilfe eines in der Kartusche gelagerten Betätigungsschaftes betätigt werden kann. Der Betätigungsschaft wird aus der Kartusche herausgeführt. Auf den Betätigungsschaft wird dann ein Betätigungsgriff oder Betätigungshebel aufgesetzt, der nach optischen und gestalterischen Erfordernissen ausgestaltet ist.

Bei neueren Sanitärarmaturen sind auch Betätigungsgriffe bekannt, die als kurzer Stab ausgebildet sind, so genannte Joysticks.

Zur Befestigung der Betätigungsgriffe an den Betätigungsschäften der Mischerkartuschen ist es bekannt, im Betätigungsgriff eine Klemmschraube unterzubringen, die gegen den Betätigungsschaft festgeschraubt wird, so dass der Griff verklemmt ist. Zur Verbesserung der Befestigung kann der Schaft auch eine Kerbe aufweisen, in die die Klemmschraube eingreift, um dadurch ein Lockern des Griffs zu verhindern. Diese Klemmschraube soll aber von außen nicht sichtbar sein. Deswegen ist es häufig erforderlich, die Öffnung, durch die die Klemmschraube zugänglich ist, durch eine Abdeckung zu verkleiden.

Gerade bei den als Joystick ausgebildeten kleinen Betätigungsgriffen muss auch die Klemmschraube sehr klein sein, da wenig Platz zur Verfügung steht.

Jede derartige Befestigungsart ist aber problematisch, da die Klemmschrauben sehr klein sind, sich häufig nur mit Spezialwerkzeug bedienen lassen und auch die Gefahr besteht, dass sie verloren gehen. Darüber hinaus besteht die Gefahr, dass sich im Lauf der Zeit die Befestigung lockert, was beim Bedienen des Ventils zu einer Beeinträchtigung für den Benutzer führt.

Bei einer bekannten Griffbefestigung (EP 579 111) wird der Betätigungsschaft der Mischerkartusche in einem Flanschelement festgeschraubt, das dann in eine Griffhaube eingesetzt und dort mit einer Madenschraube gesichert wird.

Bei einem weiteren Einhandhebelmischer (DE 38 15 901) wird auf das freie Ende des Betätigungsschafts ein Griff aufgeschnappt. Der Betätigungsschaft weist seitliche Vertiefungen auf, in die federnde Vorsprünge des Griffs einschnappen.

Bei einem nochmals weiteren Mischventil (US 4,960,154) wird der Griff dadurch an dem Betätigungsschaft befestigt, dass der Betätigungsschaft in eine Sacklochbohrung des Griffs eingesetzt und mit einer radialen Klemmschraube fest geklemmt wird.

Bei einem weiteren Mischventil (FR 2466692) ist auf den Schaft des Betätigungselements eine Hülse aufgeschoben und mit einer Hutmutter festgeschraubt. Die Hülse weist einen halbkugelförmigen Abschnitt auf, der mit einer Dichtung zur Verhinderung des Eindringen von Staub in die Armatur zusammenwirkt.

Der Erfindung liegt die Aufgabe zu Grunde, eine Befestigung für einen Mischergriff zu schaffen, die sich einfach herstellen und montieren lässt und bei der die eingangs erwähnten Nachteile des Standes der Technik nicht auftreten.

Zur Lösung dieser Aufgabe schlägt die Erfindung eine Sanitärarmatur mit den im Anspruch 1 genannten Merkmalen vor. Weiterbildungen der Erfindung sind Gegenstand von Unteransprüchen.

Während bei allen bekannten Befestigungsarten von Griffen an Mischerkartuschen die Sicherung immer direkt zwischen Griff und Schaft wirkt, geht die Erfindung einen anderen Weg, indem sie nämlich die zusammen die Sicherungseinrichtung bildenden Sicherungselemente nicht zwischen Griff und Schaft einsetzt, sondern zwischen dem Griff und einem anderen Teil, dem gegenüber die Mischerkartusche festgelegt ist. Dadurch wird es möglich, dass die Sicherungselemente nicht an die Größe des Betätigungsschaftes angepasst sein müssen. Denn die Betätigungsschäfte sind relativ klein und werden durch Kerben oder ähnliche Querschnittsverringerungen geschwächt.

Eine Möglichkeit, wie die Sicherungseinrichtung ausgebildet sein kann, besteht darin, dass eines der Sicherungselemente an dem Betätigungsgriff angeordnet ist, während das andere Sicherungselement dem Armaturengehäuse zugeordnet ist. Selbst bei sehr kleinen, insbesondere sehr schmalen, Betätigungsgriffen ist es möglich, den Betätigungsgriff an einer Stelle, wo er nicht unbedingt sichtbar ist, so auszubilden, dass dort genügend Material zum Angreifen der Sicherungseinrichtung vorhanden ist.

Insbesondere kann in Weiterbildung der Erfindung vorgesehen sein, dass das dem Armaturengehäuse zugeordnete Sicherungselement ein Teil der Befestigung der Mischerkartusche ist.

Es ist ebenfalls möglich und wird von Erfindung vorgeschlagenen, dass das dem Armaturengehäuse zugeordnete Sicherungselement oder Fixierungselement ein Teil des Armaturengehäuses selbst ist.

Beispielsweise kann dieses Sicherungselement ein Teil des Auslaufs der Sanitärarmatur sein.

Es kann vorgesehen sein, dass das dem Armaturengehäuse zugeordnete Sicherungselement eine Hülse ist. Diese kann beispielsweise auch dazu dienen, in Zusammenwirken mit einem Teil des Armaturengehäuses, beispielsweise dem Auslauf der Sanitärarmatur, die Mischerkartusche in dem Armaturengehäuse zu positionieren und zu fixieren.

Insbesondere kann vorgesehen sein, dass das dem Armaturengehäuse zugeordnete Sicherungselement eine Überwurfmutter ist, die ebenfalls beispielsweise zum Festlegen und Fixieren der Mischerkartusche, direkt oder über eine Hülse, vorgesehen ist.

Das dem Betätigungsgriff zugeordnete Sicherungselement kann beispielsweise ein Flansch sein. Dieser kann an dem der Mischerkartusche zugewandten Ende des Betätigungsgriffs angeordnet sein, so dass er optisch nicht stört. Je nachdem, wie die Mischerkartusche betätigt wird, kann erfindungsgemäß in Weiterbildung vorgesehen sein, dass die der Mischerkartusche abgewandte Oberfläche des Flanschs ein Teil einer Kreiszylinderfläche bzw. einer Kugeloberfläche ist. Wenn die Mischerkartusche durch Verschwenken des Betätigungsschafts um eine ortsfeste Achse betätigt wird, ist eine Kreiszylinderoberfläche die von der Erfindung vorgeschlagene bevorzugte Ausbildung. Wenn dagegen, wie dies meistens gegeben ist, der Betätigungsschaft um einen festen Punkt in unterschiedliche Richtungen verschwenkt werden kann, ist die von der Erfindung bevorzugte Möglichkeit die Kugeloberfläche des Flanschs.

Bei den zum Stand der Technik gehörenden Mischerventilen ist der Griff in der Regel derart ausgebildet, dass er den Bereich, in dem der Betätigungsschaft aus der Kartusche und aus dem Armaturengehäuse heraus tritt, optisch abdeckt. Bei sehr kleinen stabartigen Betätigungsgriffen kann der gerade erwähnte von Erfindung vorgeschlagene Flansch diese Aufgabe übernehmen. Vorzugsweise ist die Sanitärarmatur derart ausgebildet, dass der Flansch die Durchtrittsöffnung für den Betätigungsschaft in allen möglichen Positionen der Mischerkartusche abdeckt. Die Abdeckung kann dabei insbesondere im Zusammenwirken mit dem dem Armaturengehäuse zugeordneten Sicherungselement erfolgen.

Um das Eindringen von Reinigungsmittel in das Innere der Sanitärarmatur zu verhindern, kann erfindungsgemäß zwischen den beiden zusammen die Sicherungseinrichtung bildenden Sicherungselementen eine Dichtung vorgesehen sein. Diese Dichtung kann insbesondere an dem armaturenseitigen Sicherungselement angeordnet bzw. befestigt sein. Sie kann insbesondere auch ein Teil eines Befestigungselements sein.

Zur Verbesserung der Handhabung der Sanitärarmatur kann vorgesehen sein, dass die Dichtung eine Gleichfläche aufweist, längs der das jeweils andere Sicherungselement gleitet.

Die Sicherungseinrichtung dient dazu, den Betätigungsgriff gegen Abziehen oder Abnehmen von dem Betätigungsschaft zu sichern. Es ist nicht erforderlich, dass die Sicherungseinrichtung den Betätigungsgriff auch gegen eine Verdrehung gegenüber dem Betätigungsschaft sichert. Falls dies gewünscht ist, kann eine solche Sicherung gegen Verdrehen durch entsprechende Formgebung von Betätigungsschaft und Griff erreicht werden. Der Griff wird, ähnlich wie im Stand der Technik, dadurch mit dem Betätigungsschaft verbunden, dass er in axialer Richtung des Betätigungsschaftes auf diesen aufgesteckt wird. Zu diesem Zweck hat der Betätigungsgriff üblicherweise eine Aufnahme, die beispielsweise als einseitig geschlossenes Hülsenelement ausgebildet sein kann.

Weitere Merkmale, Einzelheiten und Vorzüge der Erfindung ergeben sich aus den Patentansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie an Hand der Zeichnung. Hierbei zeigen:
- Figur 1: einen schematischen Schnitt durch eine Sanitärarmatur nach der Erfindung;
- Figur 2: eine der Figur 1 entsprechende Darstellung bei einer zweiten Ausführungsform;
- Figur 3: eine den Figuren 1 und 2 entsprechende Darstellung bei einer dritten Ausführungsform;
- Figur 4: einen schematischen Schnitt durch eine Sanitärarmatur nach einer weiteren Ausführungsform;
- Figur 5: einen schematischen Schnitt durch eine Sanitärarmatur bei einer nochmals weiteren Ausführungsform der Erfindung.

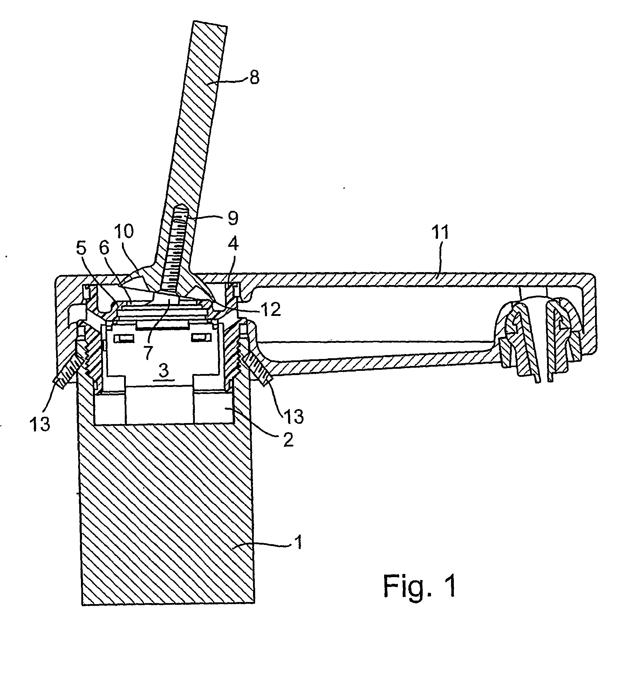

Figur 1 zeigt sehr vereinfacht einen Schnitt durch eine Sanitärarmatur. Der untere Teil des Armaturengehäuses 1 ist nur schematisch dargestellt, da es auf dessen Einzelheiten nicht ankommt. In dem Armaturengehäuse 1 ist ein Aufnahmeraum 2 ausgebildet, in dem eine Mischerkartusche 3 angeordnet ist. Die Mischerkartusche wird in die oben offene Aufnahme 2 eingesetzt und dort mittels einer Hülse 4 zentriert und positioniert. Die Hülse 4 weist eine Zwischenwand 5 auf, in der eine zentrale Öffnung 6 vorhanden ist. Diese Zwischenwand liegt auf dem oberen Rand der Mischerkartusche 3 auf. Aus der Mischerkartusche 3 ragt ein Betätigungsschaft 7 heraus, der mit einer Längsverzahnung versehen ist.

Wenn die Mischerkartusche 3 und die Hülse 4 in den Aufnahmeraum 2 eingesetzt sind, wird auf den Betätigungsschaft 7 ein Betätigungsgriff 8 aufgeschoben. Dieser Betätigungsgriff 8 weist eine zentrale Öffnung 9 in Form einer Sackbohrung auf, deren Ränder ebenfalls eine Längsverzahnung aufweisen können. Es ist auch denkbar, dass die Längsverzahnung erst beim Aufschieben des Betätigungsgriffs 8 auf den Betätigungsschaft 7 der Mischerkartusche 3 eingeschnitten wird. Die Verbindung in Drehrichtung kann auch durch einen anders gestalteten Formschluss errichtet werden.

Im Bereich seines unteren, der Mischerkartusche 3 zugewandten Endes enthält der Betätigungsgriff 8 einen nach außen gerichteten Flansch 10, dessen Oberfläche in einer Kugeloberfläche liegt. Der Mittelpunkt dieser gedachten Kugel liegt im Mittelpunkt der Drehlagerung des Betätigungsschafts 7. Beim Verschwenken des Betätigungsschafts 7 mit Hilfe des Betätigungsgriffs 8 bleibt also die Oberfläche des Flanschs 10 in der festen Kugeloberfläche.

Das Armaturengehäuse enthält einen Auslauf 11, der in einem Auslaufgehäuse ausgebildet ist. Dieser Auslauf 11 enthält in seiner Oberseite eine Öffnung 12, deren Rand ebenfalls in einer Kugeloberfläche liegt. Der Rand der Öffnung 12 ist, von oben gesehen, hinterschnitten. Wird nun der Auslauf 11 mit seiner Öffnung 12 über den Betätigungsgriff 8 aufgefädelt und auf die Oberseite des übrigen Armaturengehäuses 1 aufgesetzt, so liegt die Oberfläche des Flanschs 10 flächig an dem Rand der Öffnung 12 des Auslaufs 11 an. In dieser Position wird der Auslauf 11 mit Hilfe zweier Schrauben 13 festgelegt. Bei der Verschwenkung des Betätigungsgriffs 8 liegt also die Kugeloberfläche seines Flanschs 10 an der komplementär ausgebildeten Öffnung 12 des Auslaufs 11 an. Die Befestigung des Auslaufs 11 dient gleichzeitig zur Festlegung der Hülse 4 und damit über die Zwischenwand 5 auch der Mischerkartusche 3 in dem Armaturengehäuse 1. Die Sicherung gegen Abziehen wird durch das Anliegen der Kugeloberfläche des Flanschs 10 an dem Rand der Öffnung 12 gewährleistet. Die Mitnahme des Griffs 8 in Umfangsrichtung wird durch die Längsverzahnung des Betätigungsschafts 7 erreicht.

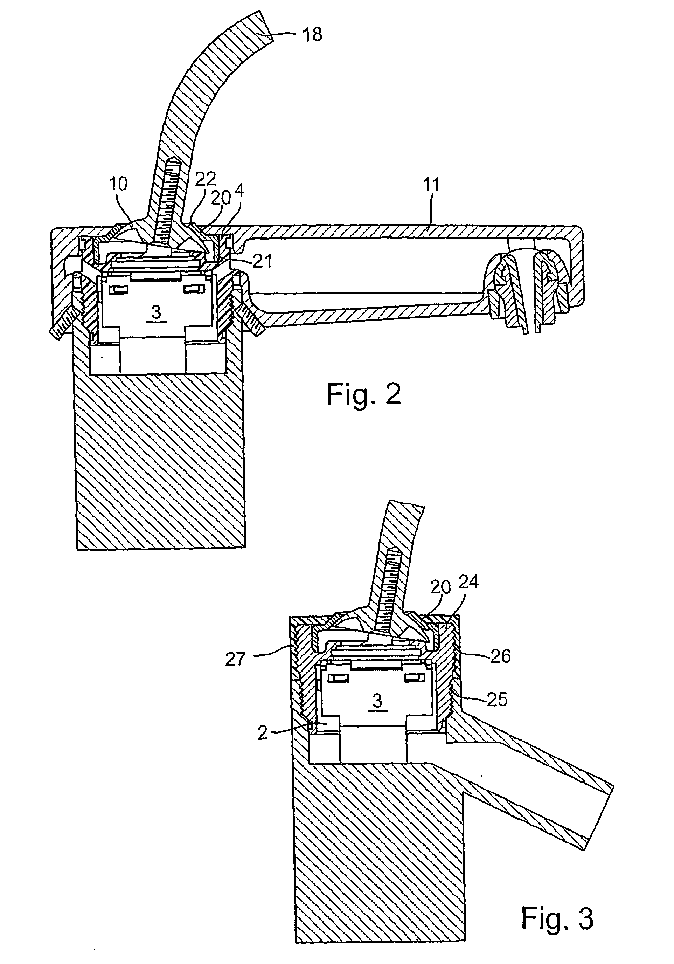

Figur 2 zeigt eine geänderte Ausführungsform, bei der nur die Teile im Einzelnen beschrieben werden, die sich von denen der Ausführungsform nach Figur 1 unterscheiden. Zur Positionierung der Mischerkartusche 3 dient wieder eine Hülse 4, die, ebenso wie die Hülse 4 der Ausführungsform nach Figur 1, nach oben hin offen ist. In dieses oben offene Ende der Hülse 4 ist ein Deckelelement 20 von oben eingeschoben, das mit seinem zylindrischen unteren Rand 21 an der Innenseite der Hülse 4 oberhalb der Zwischenwand 5 anliegt. Im mittleren Bereich weist der Deckel 20 eine Öffnung 22 auf, die durch Ausbiegung des Materials einen in seiner Fläche vergrößerten Rand erhalten hat. Die nach innen gerichtete Fläche dieser vergrößerten Randzone liegt auf einer Kugeloberfläche, die komplementär zur Kugeloberfläche des Flanschs 10 des Betätigungselements 18 ist. Auf diese Einheit ist dann der Auslauf 11 aufgesetzt. Der Auslauf 11, der in gleicher Weise wie bei der Ausführungsform nach Figur 1 befestigt ist, drückt den Deckel 20 in die Hülse 4 und sorgt so dafür, dass der Griff 18 gegen ein Abziehen gesichert ist. Der Deckel 20 bildet mit seinem Randbereich rings um die Öffnung 22 eine vergrößerte Anlagefläche, die auch dazu verwendet werden kann, eine Dichtung zu bilden. Der Deckel 20 kann aus einem gummielastisch verformbaren Material bestehen und ein Dichtungselement bilden. Dieses Dichtungselement kann auf der dem bewegten Teil gegenüberliegenden Fläche mit einer Gleitfläche versehen sein. Es ist auch möglich, dass das Deckelelement 20 nur zur Verbesserung der Gleiteigenschaften und zur Vergrößerung der Fläche verwendet wird, ohne Dichteigenschaften zu besitzen. Das Deckelelement 20 kann sowohl aus einem Kunststoff als auch aus Metall bestehen.

Bei der in Figur 3 dargestellten Ausführungsform wird die Mischerkartusche in der Aufnahme 2 durch eine Hülse 24 festgehalten, die ähnlich aufgebaut ist wie die Hülse 4 bei den Ausführungsformen nach Figur 1 und 2, jedoch in das Armaturengehäuse 1 eingeschraubt wird. Der obere Innenrand der Aufnahme 2 weist ein Innengewinde 25 auf, in das die Hülse 24 eingeschraubt wird, bis sie mit einer Schulter auf der entsprechenden Gegenschulter des Armaturengehäuses aufliegt. Im oberen Bereich weist die Hülse 24 ein weiteres Außengewinde 26 auf, dass etwas weiter außen liegt als das erste Gewinde. In das oben offene Ende der Hülse 24 wird das gleiche Deckelelement 20 eingesetzt wie bei der Ausführungsform nach Figur 2. Zum Festlegen dient dann eine äußere Kappe 27, die eine der Öffnung 12 des Auslaufs 11 bei der Ausführungsform nach Figur 1 und 2 entsprechende Öffnung aufweist. Die Kappe wird auf das Außengewinde 26 der Hülse 24 aufgeschraubt. Sie legt das Deckelelement 20 in der gleichen Weise fest wie bei der Ausführungsform nach Figur 2.

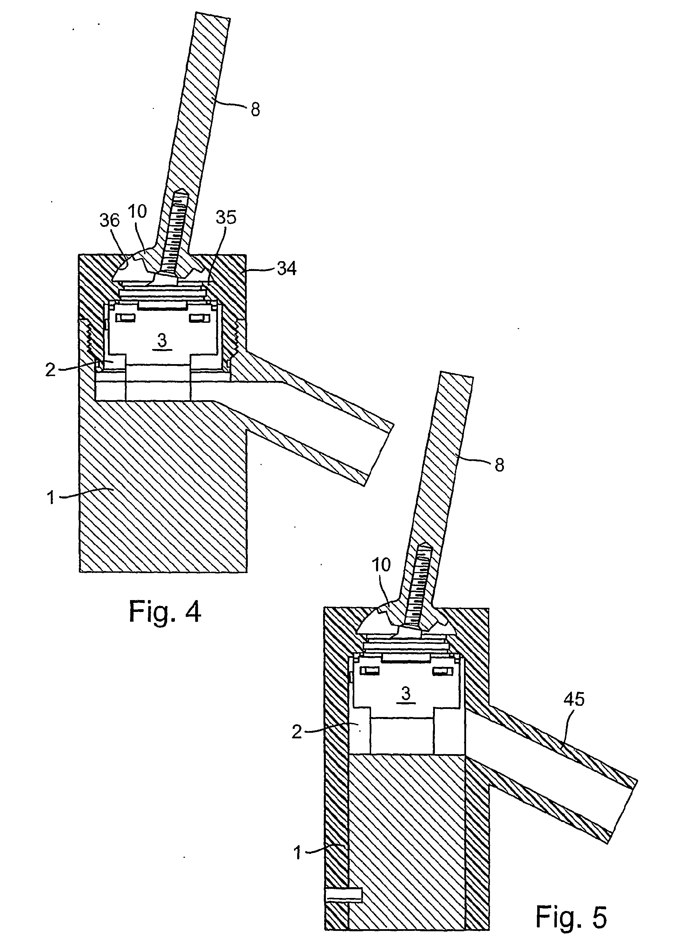

In Figur 4 wird zum Festlegen der Mischerkartusche 3 in dem Aufnahmeraum 2 der Sanitärarmatur 1 eine Kappe 34 verwendet, die in ihrem unteren Bereich die Rolle der Hülse 4 bzw. 24 bei den Ausführungsformen der Figuren 1 bis 3 übernimmt und in ihrem oberen Bereich das Sicherungselement der Sicherungseinrichtung für den Flansch 10 des Betätigungsgriffs 8 bildet. Zu diesem Zweck hat die Kappe 34 oberhalb der angedeuteten Zwischenwand 35 einen Hohlraum, der nach oben hin durch eine Kugeloberfläche 36 abgeschlossen wird, in deren Mitte eine Durchtrittsöffnung für den Griff 8 vorhanden ist. Hier wird die Sicherung des Griffs gegen Abziehen durch das Zusammenwirken zwischen der Oberfläche des Flanschs 10 und einer Gegenfläche in der Kappe 34 gebildet.

Bei der Ausführungsform nach Figur 5 wird nicht nur das Hülsenelement 4 bzw. 24, sondern auch die Seitenwand der Aufnahme 2 für die Mischerkartusche 3 durch das Armaturengehäuse 1 gebildet, das gleichzeitig auch einen Auslauf 45 aufweist. Im oberen Bereich ist das Armaturengehäuse 1 so aufgebaut wie die Kappe 34 bei der Ausführungsform nach Figur 4.

Der Grundgedanke der Erfindung liegt darin, zum Fixieren des Betätigungsgriffs bzw. zu seiner Sicherung gegen Abziehen von dem Betätigungsschaft, auf den er aufgeschoben ist, eine Sicherungseinrichtung zu verwenden, die nicht direkt zwischen dem Griff und dem Schaft wirkt, sondern zwischen dem Griff und einem anderen Teil der Sanitärarmatur, vorzugsweise einem Teil des Armaturengehäuses, der gleichzeitig auch noch zur Sicherung der Mischerkartusche in dem Armaturengehäuse dienen kann.

## Patentansprüche

1. Sanitärarmatur, mit
1.1 einem Armaturengehäuse (1),
1.2 einer in dem Armaturengehäuse (1) angeordneten Mischerkartusche (3), die
1.2.1 einen Betätigungsschaft (7) aufweist,
1.3 einem Betätigungsgriff (8, 18) zum Betätigen der Mischerkartusche (3), der
1.3.1 mit dem Betätigungsschaft (7) der Mischerkartusche (3) verbindbar ist, sowie mit
1.4 einer Sicherungseinrichtung zum Sichern des mit dem Betätigungsschaft (7) verbundenen Betätigungsgriffs (8, 18) gegen dessen Abnehmen, die
1.5 mindestens zwei zusammenwirkende Sicherungselemente aufweist, von denen eines an dem Betätigungsgriff (8, 18) angeordnet ist und das andere ein Teil des Armaturengehäuses ist oder einen Teil der Befestigung der Mischerkartusche (3) bildet, derart,
1.6 dass die Sicherungseinrichtung nicht zwischen dem Betätigungsgriff (8, 18) und dem Betätigungsschaft (7) wirkt.

2. Sanitärarmatur nach Anspruch 1, bei der das dem Armaturengehäuse (1) zugeordnete Sicherungselement ein Teil des Auslaufs (11) der Sanitärarmatur ist.

3. Sanitärarmatur nach Anspruch 1 oder 2, bei der das dem Armaturengehäuse (1) zugeordnete Sicherungselement eine Hülse (4, 24) ist.

4. Sanitärarmatur nach einem der vorhergehenden Ansprüche, bei der das dem Armaturengehäuse (1) zugeordnete Sicherungselement eine Überwurfmutter ist.

5. Sanitärarmatur nach einem der vorhergehenden Ansprüche, bei der das dem Betätigungsgriff (8, 18) zugeordnete Sicherungselement ein Flansch (10) ist.

6. Sanitärarmatur nach einem der vorhergehenden Ansprüche, bei der die der Mischerkartusche (3) abgewandte Oberfläche des an dem Betätigungsgriff (8, 18) angeordneten Sicherungselements ein Teil einer Kreiszylinderfläche bzw. einer Kugeloberfläche ist.

7. Sanitärarmatur nach Anspruch 5 oder 6, bei der der Flansch (10) derart ausgebildet ist, dass er die Durchtrittsöffnung für den Betätigungsschaft (7) vorzugsweise in allen möglichen Positionen der Mischerkartusche (3) abdeckt.

8. Sanitärarmatur nach einem der vorhergehenden Ansprüche, bei der zwischen den beiden Sicherungselementen der Sicherungseinrichtung eine Dichtung angeordnet ist.

9. Sanitärarmatur nach Anspruch 8, bei der die Dichtung an dem armaturenseitigen Sicherungselement angeordnet ist.

10. Sanitärarmatur nach Anspruch 8 oder 9, bei der die Dichtung eine Gleitfläche aufweist.

11. Sanitärarmatur nach einem der vorhergehenden Ansprüche, bei der die Festlegung des Betätigungsgriffs (8, 18) an dem Betätigungsschaft (7) in Umfangsrichtung durch Formschluss zwischen diesen beiden Teilen erfolgt.

## Claims

1. A plumbing fixture having
1.1 a housing (1),
1.2 a mixer cartridge (3) arranged in the fixture's housing (1) that has
1.2.1 an operating shaft (7) and
1.3 an operating grip (8, 18) for operating the mixer cartridge (3) that
1.3.1 may be attached to the operating shaft (7) of the mixer cartridge (3) and to
1.4 a securing device for securing the operating grip (8, 18) attached to the operating shaft (7) against the former's removal that has
1.5 at least two, interacting, securing components, one of which is arranged on the operating grip (8, 18), and the other of which either forms part of the fixture's housing or part of the mountings of the mixer cartridge (3) such that
1.6 the securing device does not interact with both the operating grip (8, 18) and the operating shaft (7).

2. A plumbing fixture according to claim 1, wherein the securing component associated with the fixture's housing (1) is part of the plumbing fixture's spout (11).

3. A plumbing fixture according to claim 1 or claim 2, wherein the securing component associated with the fixture's housing (1) is a collar (4, 24).

4. A plumbing fixture according to any of the foregoing claims, wherein the securing component associated with the fixture's housing (1) is a counternut.

5. A plumbing fixture according to any of the foregoing claims, wherein the securing component associated with the operating grip (8, 18) is a flange (10).

6. A plumbing fixture according to any of the foregoing claims, wherein that surface of the securing component arranged on the operating grip (8, 18) opposite the mixer cartridge (3) is part of a circular, cylindrical surface or spherical surface.

7. A plumbing fixture according to claim 5 or claim 6, wherein the flange (10) is configured such that it covers the through hole for the operating shaft (7) and preferably covers it for all possible positionings of the mixer cartridge (3).

8. A plumbing fixture according to any of the foregoing claims, wherein a seal is arranged between the securing device's pair of securing components.

9. A plumbing fixture according to claim 8, wherein the seal is arranged on the securing component mating to the fixture.

10. A plumbing fixture according to claims 8 or claim 9, wherein the seal has a gliding surface.

11. A plumbing fixture according to any of the foregoing claims, wherein the operating grip (8, 18) is secured to the operating shaft (7) by an interference fit between the mating surfaces of those two components.

## Revendications

1. Robinetterie sanitaire comprenant :
1.1 un corps de robinetterie (1),
1.2 une cartouche (3) pour mitigeur agencée dans le corps de robinetterie (1), cartouche qui présente
1.2.1 une tige d'actionnement (7),
1.3 une poignée (8, 18) permettant d'actionner la cartouche (3) pour mitigeur,
1.3.1 poignée qui est reliable à la tige d'actionnement (7) de la cartouche (3) pour mitigeur, ainsi qu'un
1.4 dispositif servant à retenir la poignée d'actionnement (8, 18) reliée à la tige d'actionnement (7) pour empêcher son enlèvement, ce dispositif présentant
1.5 au moins deux éléments de retenue interagissant, l'un étant agencé contre la poignée d'actionnement (8, 18), l'autre formant une partie du corps de robinetterie ou formant une partie de la fixation de la cartouche (3) pour mitigeur, de sorte
1.6 que le dispositif de retenue n'agit pas entre la poignée d'actionnement (8, 18) et la tige d'actionnement (7).

2. Robinetterie sanitaire selon la revendication 1, dans laquelle l'élément de retenue affecté au corps de robinetterie (1) est une partie du bec d'écoulement (11) de la robinetterie sanitaire.

3. Robinetterie sanitaire selon les revendications 1 ou 2, dans laquelle l'élément de retenue affecté au corps de robinetterie (1) est une douille (4, 24).

4. Robinetterie sanitaire selon l'une des revendications précédentes, dans laquelle l'élément de retenue affecté au corps de robinetterie (1) est un écrou à collet.

5. Robinetterie sanitaire selon l'une des revendications précédentes, dans laquelle l'élément de retenue affecté à la poignée d'actionnement (8, 18) est un flasque (10).

6. Robinetterie sanitaire selon l'une des revendications précédentes, dans laquelle la surface - tournant le dos à la cartouche (3) pour mitigeur - de l'élément de retenue agencé contre la poignée d'actionnement (8, 18) est une partie d'une surface circulaire de cylindre ou d'une surface sphérique.

7. Robinetterie sanitaire selon les revendications 5 ou 6, dans laquelle le flasque (10) est d'une géométrie telle qu'il recouvre - de préférence dans toutes les positions possibles de la cartouche (3) pour mitigeur - l'orifice par lequel passe la tige d'actionnement (7).

8. Robinetterie sanitaire selon l'une des revendications précédentes, dans laquelle un joint est agencé entre les deux éléments de retenue composant le dispositif de retenue.

9. Robinetterie sanitaire selon la revendication 8, dans laquelle le joint est agencé contre l'élément de retenue côté robinetterie.

10. Robinetterie sanitaire selon les revendications 8 ou 9, dans laquelle le joint présente une surface de glissement.

11. Robinetterie sanitaire selon l'une des revendications précédentes, dans laquelle la fixation de la poignée d'actionnement (8, 18) contre la tige d'actionnement (7) a lieu dans le sens périmétrique, par adhérence des formes de ces deux pièces.
